# EUROPEAN PATENT APPLICATION

(11) **EP 1 563 894 A1**
(43) Date of publication of application: **17.08.2005**
(21) Application number: 03748686.7
(22) Date of filing: 02.10.2003
(51) Int. Cl.: B01D 63/06

(54) **MULTI-TUBE SEPARATION MEMBRANE MODULE**

(30) Priority: 07.10.2002 JP 2002294010
(71) Applicant: Bussan Nanotech Research Institute Inc., Tokyo 100-0004 (JP)
(72) Inventor: IKEDA, Shiro c/o Bussan Nanotech RESEARCH INST INC, Tokyo 100-0004 (JP); SATO, Ryoki c/o Bussan Nanotech RESEARCH, Tokyo 100-0004 (JP)
(74) Representative: Grünecker, Kinkeldey, Stockmair & Schwanhäusser Anwaltssozietät
(86) International application number: PCT/JP2003/012678
(87) International publication number: WO 2004/035182

(57) **Abstract**

A multiple tube type separation membrane module characterized in that said module comprises plurality of tubular separation membrane elements 3 having sealed ends and open ends; outside pipes 13 surrounding the tubular separation membrane elements 3 with spaces formed therebetween and having first openings on the sealed ends side of the tubular separation membrane elements 3 as well as second openings 133 in the vicinities of the open ends of the tubular separation membrane elements; means for inlet communicating with the first openings of the outside pipes; first means for outlet communicating with the open ends of the tubular separation membrane elements; and second means for outlet communicating with the second openings of the outside pipes, wherein fluid F₁ flowing from the first openings of the outside pipes through the means for inlet flows in the spaces between the tubular separation membrane elements 3 and the outside pipes 13, component F₂ separated from the fluid F₁ by the tubular separation membrane elements 3 flows out from the first means for outlet through the open ends of the tubular separation membrane elements 3, and the remaining fluid F₃ flows out from the second means for outlet.

## Description

### BACKGROUND OF THE INVENTION

### Field of the Invention

The present invention relates to a multiple tube type separation membrane module used to separate specific components from a fluid such as a solution, a mixed gas, and the like.

### Description of the Related Art

Multiple tube type separation membrane modules as equipment for separating components in solutions or mixed gases are known. The separation membrane element used in the multiple tube type separation membrane module is made by composing a membrane of zeolite and the like having fine pores approximately as large as the molecules of substances to be separated around a porous tube.

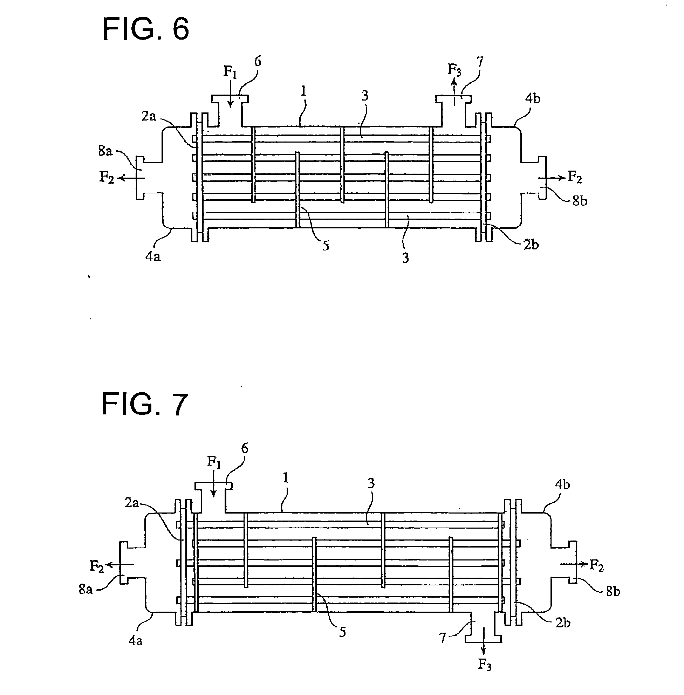

FIG. 6 shows an example of a conventional multiple tube type separation membrane module. The multiple tube type separation membrane module has a cylindrical shell 1, plurality of tubular separation membrane elements 3 extending in the cylindrical shell 1, support plates 2a and 2b having plurality of opening for supporting the tubular separation membrane elements 3 and fixed to one end and the other end of the cylindrical shell 1, covers 4a and 4b attached to the shell 1 so as to cover the support plates 2a and 2b, and plurality of baffles 5 attached in the cylindrical shell 1 so as to support the tubular separation membrane elements 3. The cylindrical shell 1 has a fluid inlet 6 in the vicinity of the support plate 2a and a fluid outlet 7 in the vicinity of the support plate 2b. Each of the baffles 5 is formed in a partly cutout disc shape and has a role to move the fluid in the shell 1 from the fluid inlet 6 of the cylindrical shell 1 to the fluid outlet 7 directing the flow of the fluid perpendicularly to the tubular separation membrane elements 3.

The covers 4a and 4b have outlets 8a and 8b for components permeating the membrane, respectively. When a fluid F1 is supplied from the fluid inlet 6 as well as the insides of the covers 4a and 4b being sucked from the outlets 8a and 8b for membrane-permeable-components, the fluid F₂ from the fluid F₁ comes out through the tubular separation membrane elements 3 and flows out from the outlets 8a and 8b, and the remaining fluid F₃ flows out from the outlet 7. Since the multiple tube type separation membrane module densely holds the separation membrane elements 3 in the cylindrical shell 1, a large total area of the separation membranes is provided in the shell and a large fluid processing capacity is available, although the shell is compact. However, the processing capabilities of the tubular separation membrane elements 3 are not fully effective, and the processing capacity of the multiple tube type separationmembrane module is far less than what calculated as the sum of the processing capacity of the individual membrane elements 3. It is contemplated that this is because (a) although the flow direction of fluid can be effectively regulated by the baffles, diffusion rate of membrane permeating components from the fluid to the surface of the tubular separation membrane is low due to the insufficient turbulence of the fluid in the vicinities of the tubular separation membrane resulting from the difficulty to sufficiently increase the flow velocity of the fluid with the buffles, and (b) the shell has a dead space to which the fluid is not distributed and the separation membranes in the dead space do not contribute to the separation.

### SUMMARY OF THE INVENTION

Accordingly, an object of the present invention is to provide a multiple tube type separation membrane module which enables full use of the processing capacity of individual tubular separation membrane element in the module.

As a result of diligent studies in view of the above object, the inventors have conceived the present invention by discovering that the processing capacity of the multiple tube type separation membrane module having plurality of tubular separation membrane elements for separating membrane-permeable-components from a fluid is improved, when the tubular separation membrane elements are surrounded by tubular materials to form narrow spaces therebetween, since the fluid passes through the spaces at a high speed promoting turbulence of the fluid in the vicinity of the tubular separation membrane elements as well as the fluid is uniformly distributed to the overall separation membranes.

That is, a multiple tube type separation membrane module of the present invention includes plurality of tubular separation membrane elements having sealed ends and open ends; outside pipes surrounding the tubular separation membrane elements with spaces formed therebetween and having first openings on the sealed ends side of the tubular separation membrane elements as well as second openings in the vicinities of the open ends of the tubular separationmembrane elements; means for inlet communicating with the first openings of the outside pipes; first means for outlet communicating with the open ends of the tubular separation membrane elements; and second means for outlet communicating with the second openings of the outside pipes, wherein a fluid flowing from the first openings of the outside pipes through the means for inlet flows in the spaces between the tubular separation membrane elements and the outside pipes, components separated from the fluid by the tubular separation membrane elements flows out from the first means for outlet through the open ends of the tubular separation membrane elements, and the remaining fluid flows out from the second means for outlet.

A preferable example of the present invention is a multiple tube type separation membrane module having a shell provided with an outlet; first support plate fixed to an end of the shell; second support plate fixed to the other end of the shell; plurality of outside pipes supported by the first and second support plates and extending in the lengthwise direction of the shell; tubular separation membrane elements disposed in the respective outside pipes; first cover attached to the first support plate; and second cover attached to the second support plate, wherein the outside pipes have first openings formed on the first cover side through which a fluid flows as well as second openings formed on the second cover side through which the remaining fluid flows out after the completion of separation processing, the tubular separation membrane elements have sealed ends on the first cover side as well as open ends on the second cover side, and the spaces between the outside pipes and the tubular separation membrane elements are opened on the first cover side and sealed on the second cover side, thereby components separated by the tubular separation membrane elements from the fluid flowing from the first openings of the outside pipes into the spaces between the outside pipes and the tubular separation membrane elements flows out into the second cover from the open ends of the tubular separation membrane elements, and the remaining fluid flows out from the outlet of the shell through the second openings.

A partition may be attached to the first cover to form a first chamber and a second chamber on both sides of the partition. A fluid flowed into the first chamber may pass through the spaces between the outside pipes having first openings in the first chamber and the tubular separation membrane elements, flow out from the second openings of the outside pipes, flow into the outside pipes having first openings in the second chamber from the second openings, pass through the spaces between the outside pipes and the tubular separation membrane elements, and flow into the second chamber.

It is preferable that the sealed ends of the tubular separation membrane elements are fixed in the outside pipes keeping the spaces by pins disposed to either the outside pipes or the sealed ends. The inside diameter of the outside pipes is preferably 1.1 to 2 times the outside diameter of the tubular separation membrane elements.

It is preferable that the tubular separation membrane elements are hollow ceramic tubes around which separation membranes having fine pores approximately as large as molecules of substances to be separated are formed. The separation membranes are preferably composed of zeolite.

### BRIEF DESCRIPTION OF THE DRAWINGS

FIG. 1 is a longitudinal sectional view showing a multiple tube type separation membrane module according to an embodiment of the present invention;
FIG. 2 is an enlarged sectional view showing an outside pipe and a tubular separation membrane element in the multiple tube type separation membrane module shown in FIG. 1;
FIG. 3 is an enlarged sectional view of the multiple tube type separation membrane module taken along the line B-B of FIG. 2;
FIG. 4 is an enlarged sectional view of the multiple tube type separation membrane module taken along the line A-A of FIG. 1;
FIG. 5 is a longitudinal sectional view of the multiple tube type separation membrane module according to another embodiment of the present invention;
FIG. 6 is a schematic longitudinal sectional view showing an example of a conventional multiple tube type separation membrane module; and
FIG. 7 is a schematic longitudinal sectional view showing another example of the conventional multiple tube type separation membrane module.

### DESCRIPTION OF THE PREFERRED EMBODIMENTS OF THE INVENTION

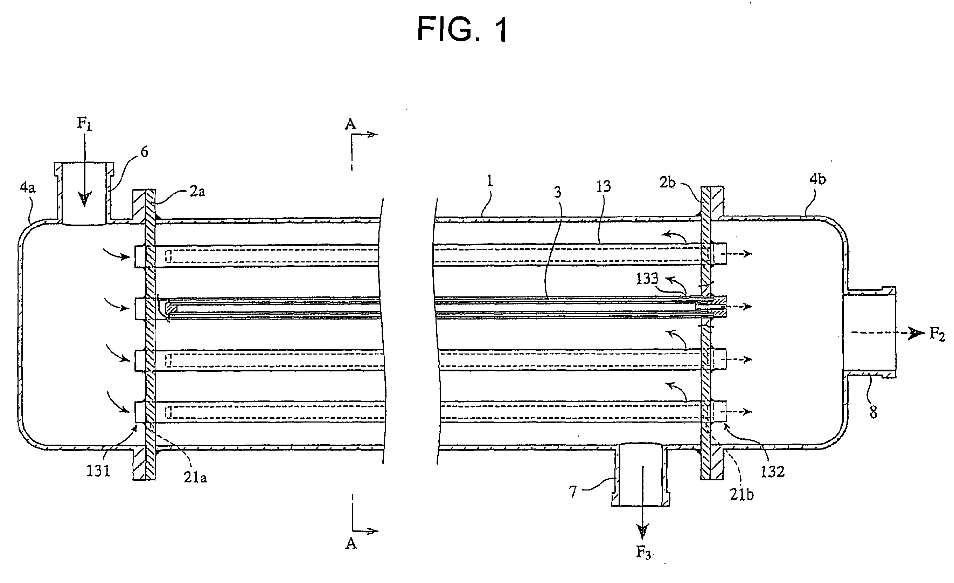

FIG. 1 shows a multiple tube type separation membrane module according to an embodiment of the present invention. The multiple tube type separation membrane module has a cylindrical shell 1, plurality of outside pipes 13 extending in the longitudinal direction of the cylindrical shell 1, support plates 2a and 2b fixed to one end and the other end of the cylindrical shell 1 to support the plurality of outside pipes 13, tubular separation membrane elements 3 disposed in the outside pipes 13 in a longitudinal direction with spaces formed therebetween, and covers 4a and 4b attached to the cylindrical shell 1 so as to cover the support plates 2a and 2b.

The cylindrical shell 1 has an outlet 7 projecting outward through which non-permeable fluid F₃ is discharged. The non-permeable fluid outlet 7 is disposed at a position near to the support plate 2b fixed to the other end of the cylindrical shell 1. The cover 4a has an inlet 6 projecting outward through which fluid F₁ is supplied, and the cover 4b has an outlet 8 projecting outward through which membrane-permeable fluid F₂ (separated component) is discharged. Further, the covers 4a and 4b have flanges gastightly engaged with the support plates 2a and 2b fixed to both ends of the cylindrical shell 1, respectively.

The support plate 2a fixed to the one end of the cylindrical shell 1 has plurality of openings 21a, and the support plate 2b fixed to the other end of the cylindrical shell 1 has plurality of openings 21b. Each of the openings 21a of the support plate 2a is correctly positioned to face the corresponding opening 21b of the support plate 2b. The extreme ends 131 of the outside pipes 13 are fixed to the openings 21a of the support plate 2a, and the rear ends 132 of the same outside pipes 13 are fixed to the openings 21b of the support plate 2b corresponding to the openings 21a, thereby the outside pipes 13 are supported by the support plates 2a and 2b. The outside pipes 13 have second openings (fluid passing ports) 133 at positions near to the support plate 2b.

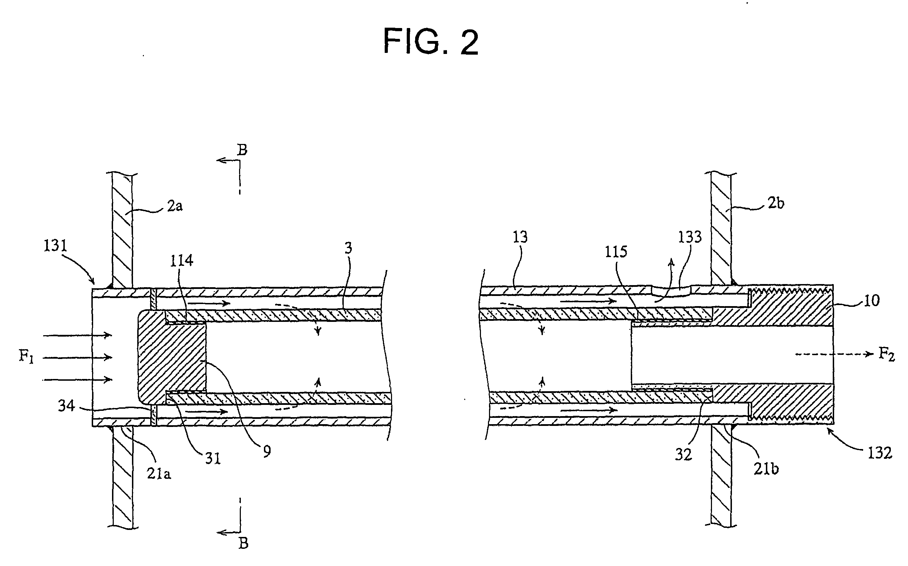

FIG. 2 shows the outside pipe 13 supported by the support plates 2a and 2b and the tubular separation membrane element 3. The extreme end of the tubular separation membrane element 3 (on the cover 4a side) is arranged as a seal end 31, and the rear end thereof (on the cover 4b side) is arranged as an open end 32. The seal end 31 is sealed by a seal member 9, and a seal 114 is applied between the seal end 31 and the seal member 9 to secure gas tightness. A fixing member 10 is fixed to the open end 32 of the tubular separation membrane element 3 with a seal 115, and the fixing member 10 is threaded into the rear end 132 of the outside tube 13.

Plurality of pins 34 are disposed on the inside surface of the outside pipe 13 at positions near to the support plate 2a, and seal member 9 abutt on the extreme ends of the pins 34. The pins 34 support the tubular separation membrane element 3 in which the seal member 9 is fitted. Note that the pins 34 may be disposed to the seal member 9. Further, a spacer having an opening may be interposed between the inside surface of the outside pipe 13 and the seal member 9. The tubular separation membrane element 3 supported by the pins 34 is free to slide in the outside pipe 13. Accordingly, when a fluid F₁ having a high temperature flows into the outside tube 13, the tubular separation membrane element 3 can be prevented from being cracked due to the difference of the thermal expansion between the outside pipe 13 and the tubular separation membrane element 3.

The outside pipe 13 is fixed to the support plates 2a and 2b gastightly by welding. The support plate 2b is welded to the outside pipe 13 being cured to prevent the portion where the fixing member 10 is threaded into the outside pipe 13 from being deformed.

The outside pipe 13 may be provided with projections on the inside surface thereof. The projection can promote turbulence in the fluid F₁ flowing in the outside pipe 13. The shape of the projection is not particularly limited, and the projection need not be formed integrally with the outside pipe 13. For example, a spring having the same outside diameter as the inside diameter of the outside pipe 13 may be disposed in the lengthwise direction of the outside pipe 13 coaxially therewith.

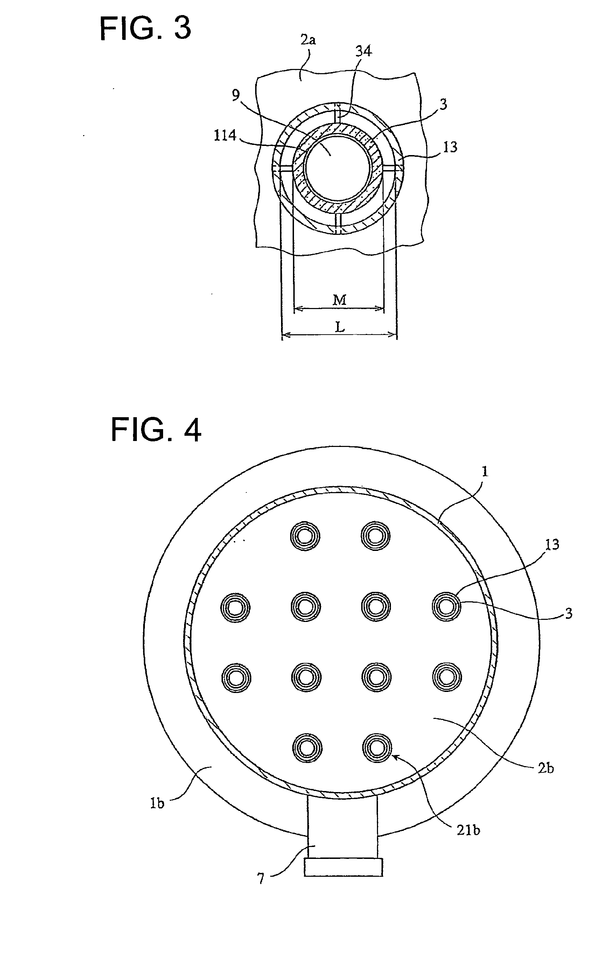

FIG. 3 is an enlarged sectional view of the multiple tube type separation membrane module taken along the line B-B of FIG. 2 and shows the outside pipe 13 and the tubular separation membrane element 3 in detail. The ratio of the inside diameter L of the outside pipe 13 to the outside diameter M of the tubular separation membrane element 3 is preferably 1.1 to 2.0 and more preferably 1.2 to 1.5. A ratio L/M very close to 1 is not preferable because pressure loss is excessively increased thereby. Further, an excessively large ratio L/M is not also preferable because the flow velocity of the fluid F₁ passing through the space between the outside pipe 13 and the tubular separation membrane element 3 is excessively reduced.

FIG. 4 is an enlarged sectional view of the multiple tube type separation membrane module taken along the line A-A of FIG. 1 and shows the outside pipes 13 and the tubular separation membrane elements 3 uniformly disposed in the cylindrical shell 1. Note that the numbers of the outside pipes 13 and the tubular separation membrane elements 3 shown in FIG. 4 are less than the actual numbers of them to simplify illustration. Although the distances between the centers of the outside pipes 13 supported by the support plates 2a and 2b are not limited, they are preferably 1. 2 to 2 times the outside diameter of the outside pipes 13 andmorepreferably 1.25 to 1.5 times the outside diameter in practical use.

As shown in FIGS. 1 and 2, the fluid F₁ supplied into the cylindrical shell 1 from the fluid inlet 6 passes through the spaces between the outside pipes 13 and the tubular separation membrane elements 3 and flows to the second openings 133. At the same time, by sucking the inside of the cover 4b from the membrane permeable fluid outlet 8 thereof, the fluid F₂ permeates each tubular separation membrane element 3, and cobines in the cover 4b, then flows out from the membrane-permeable fluid outlet 8. In contrast, the remaining fluid F₃ (non-permeable fluid), which does not permeate the tubular separation membrane elements 3, flows out to the outside of the outside pipes 13 from the second openings 133, combines in the cylindrical shell 1, and flows out from the fluid outlet 7.

Since the fluid F₁ passes through the spaces between the outside pipes 13 and the tubular separation membrane elements 3, the flow velocity of the fluid F₁ is increased and the fluid in the vicinity of the tubular separation membrane element 3 is made turbulent, thereby the diffusion of a membrane permeable substances in the fluid F₁ to the vicinities of the tubular separation membrane elements 3 is accelerated. As a result, permeation rate of the fluid F₂ through the tubular separation membrane elements 3 is increased, and processing capabilities thereof are improved consequently. When the fluid F₁ is a liquid, preferable flow velocity of the fluid F₁ in the spaces between the outside pipes 13 and the tubular separation membranes element 3 is 0.2 to 2 m/s. Since resistance occurs against the flow of the fluid F₁ passing through the spaces between the outside pipes 13 and the tubular separation membrane elements 3 by keeping the flow velocity of the fluid F₁ within the above range, the fluid flowed into the cover 4a is uniformly dispersed in the spaces between the outside pipes 13 and the tubular separation membrane elements 3 and flows therethrough. As a result, the entire area of the membranes contributes to cause the component to pass therethrough, thereby the processing capacity of the multiple tube type separation membrane module is improved in its entirety. When the fluid F₁ is a gas, preferable flow velocity of the fluid F₁ is 2 to 20 m/s.

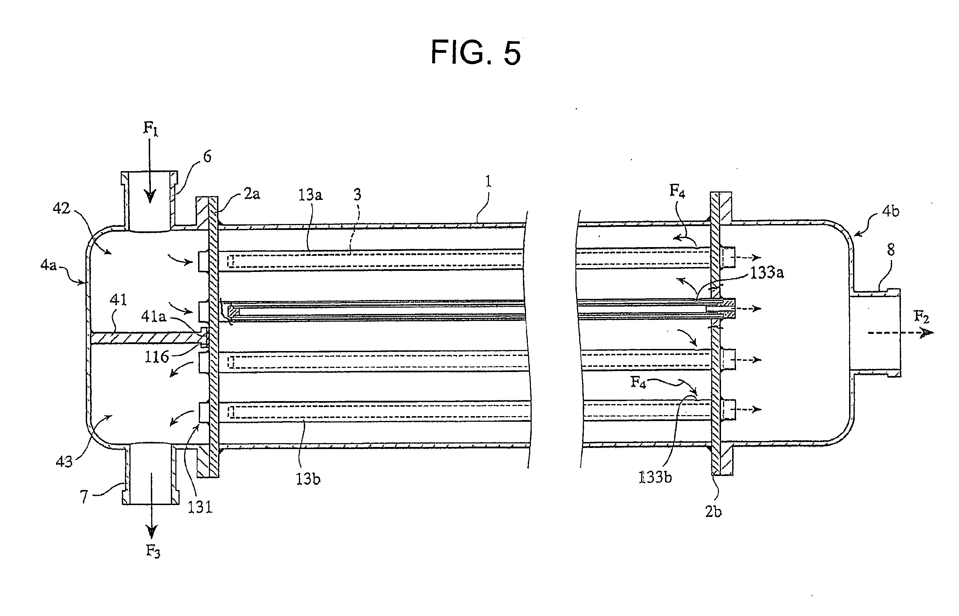

FIG. 5 shows a multiple tube type separation membrane module of another embodiment of the present invention. Since the embodiment shown in FIG. 5 is approximately the same as that shown in FIGS. 1 to 4 except that a partition 41 is disposed in a cover 4a having an inlet 6 of the fluid F₁, only the difference between the embodiments will be explained below. The partition 41 is fixed in the cover 4a to longitudinally divide it into two portions. The partition 41 is fixed to cover 4a gastightly by welding. The seal 116 is sandwiched between the end 41a of the partition 41 and support plate 2a to secure gas tightness.

The side of fluid inlet 6 of the cover 4a is arranged as the first chamber 42 by the partition 41, and the opposite side thereof is arranged as the second chamber 43. A fluid outlet 7 extending outward is disposed to the second chamber 43 divided by the partition 41. Outside pipes are composed of first outside pipes 13a whose extreme ends 131 are fixed to the first chamber 42 and second outside pipes 13b whose extreme ends 131 are fixed to the second chamber 43.

The fluid F₁ supplied to the cylindrical shell 1 from the fluid inlet 6 passes through the spaces between the first outside pipes 13a and the tubular separation membrane elements 3 and flows to second openings 133a of the first outside pipes 13a. At the same time, when the inside of cover 4b is vacuumed from membrane permeable fluid outlet 8 thereof, the insides of the tubular separation membrane elements 3, which open in the cover 4b, are also vacuumed likewise the embodiment shown in FIGS. 1 to 4. Accordingly, substances, which has permeability to the separation membranes of the tubular separation membrane elements 3, permeate the separation membranes and flows into the tubular separation membrane elements 3. The fluid F₂ that permeated the tubular separation membrane elements 3 combines together in the cover 4b and flows out from the membrane-permeable fluid outlet 8.

In contrast, the primarily processed fluid F₄, which does not permeate the tubular separation membrane elements 3 in the first outside pipes 13a, flows into the cylindrical shell 1 from the second openings 133a of the first outside pipes 13a. The primarily processed fluid F₄, which fills the cylindrical shell 1, flows into the spaces between the outside pipes 13b and the tubular separation membrane elements 3 from second openings 133b of the second outside pipes 13b whose extreme ends 131 are fixed to the second chamber 43, passes through the spaces therebetween, combines in the second chamber 43 of the cover 4a, and flows out from the fluid outlet 7 disposed to the second chamber 43.

When the multiple tube type separation membrane module shown in FIG. 5 is used, even if the quantity of flow of the fluid F₁ is reduced to about one half that in the multiple tube type separation membrane module shown in FIGS. 1 to 4, the fluid F₁ exhibits a relatively large flow velocity between the first and second outside pipes 13a and 13b and the tubular separation membrane elements 3. Accordingly, it can be said that this multiple tube type separation membrane module is preferable when the fluid F₁ has a small quantity of flow.

In any of the multiple tube type separation membrane modules, it is preferable to use a tubular porous support member which is composed of ceramics or metal and around which a separation membrane composed of zeolite and the like are formed as the tubular separation membrane element 3. When, for example, the fluid F₁ composed of water and ethanol is separated, a tubular separation membrane element composed of a tubular support member, which is composed of porous ceramics and around which an A type zeolite membrane is formed, can be used. In this case, water becomes to compose the fluid F₂ which permeates the tubular separation membrane element and ethanol becomes to compose the non-permeate fluid F₃.

### Example 1

Tubular separation membrane elements 3 were made by forming zeolite membranes around tubular porous support members composed of α-alumina (length: 80 cm, outside diameter: 10 mm, inside diameter: 9 mm), and a multiple tube type separation membrane module (length: 110 cm, outside diameter: 14 cm) similar to the embodiment shown in FIGS. 1 and 4 was assembled using 25 pieces of the tubular separation membrane elements. Mixed vapor composed of water and ethanol (water : ethanol = 0.05 : 0.95 (mass fraction)) was supplied to a cylindrical shell 1 of the multiple tube type separation membrane module. The mixed stream was supplied at a rate of 100 kg/h, the temperature of the mixed steam was 110°C at a fluid inlet 6 and the pressure thereof was 300 kPa. When the mixed vapor was supplied and membrane-permeable fluid outlet 8 was sacked at 1.3 kPa, membrane-permeable fluid F₂ flowed out from the membrane-permeable fluid outlet 8, and non-permeable fluid F₃ flowed out from fluid outlet 7. The flow rate of water vapor as the membrane-permeable fluid F₂ was 1.8 kg/h at the membrane-permeable fluid outlet 8.

### Comparative Example 1

Mixed stream composed of water and ethanol was separated likewise the Example 1 except that a multiple tube type separation membrane module (length: 110 cm, outside diameter: 14 cm, number of tubular separation membrane elements: 25) was assembled as shown in FIG. 7.

The multiple tube type separation membrane module shown in FIG. 7 is approximately the same as the embodiment shown in FIG. 6 except that the rear ends of plurality of tubular separation membrane elements 3 whose extreme ends are sealed are attached to the support plate 2a attached to an end of the shell 1 and to the support plate 2b attached to the other end of the shell 1 in a cantilever beam fashion. When the mixed stream composed of water and ethanol was supplied into the shell 1 from the inlet 6 as well as the insides of channel members 4a and 4b being sucked from membrane-permeable component outlets 8a and 8b, water vapor in the mixed stream permeated the tubular separation membrane elements 3 as membrane-permeable fluid F₂ and flowed out from the outlets 8a and 8b, and ethanol flowed out from outlet 7 as non-permeable fluid F₃.

The flow-out rate of the water vapor as the membrane-permeable fluid F₂ was 0.8 kg/h at the membrane-permeable component outlets 8a and 8b.

### Possible Industrial Application

The multiple tube type separation membrane module of the present invention separates membrane-permeable-components (membrane-permeable-fluid) from a fluid by the tubular separation membrane elements wherein the fluid is caused to pass through the narrow spaces formed by surrounding the tubular separation membrane elements with the surrounding members. With the above arrangement, since a fluid flow is improved and the contact state between the fluid and the tubular separation membrane element is improved, the processing capabilities of the respective tubular separation membrane elements can be effectively exhibited. Further, the flow velocity of the fluid which permeates the tubular separation membrane elements is increased by increasing the flow velocity of the fluid in the vicinities of the tubular separation membrane elements, thereby the processing capacity of the multiple tube type separation membrane module can be greatly improved in its entirety.

## Claims

1. A multiple tube type separation membrane module comprising:
plurality of tubular separation membrane elements having sealed ends and open ends;
outside pipes surrounding the tubular separation membrane elements with spaces formed therebetween and having first openings on the sealed ends side of the tubular separation membrane elements as well as second openings in the vicinities of the open ends of the tubular separation membrane elements;
means for inlet communicating with the first openings of the outside pipes;
first means for outlet communicating with the open ends of the tubular separation membrane elements; and
second means for outlet communicating with the second openings of the outside pipes,
wherein a fluid flowing from the first openings of the outside pipes through the means for inlet flows in the spaces between the tubular separation membrane elements and the outside pipes, components separated from the fluid by the tubular separation membrane elements flows out from the first means for outlet through the open ends of the tubular separation membrane elements, and the remaining fluid flows out from the second means for outlet.

2. A multiple tube type separation membrane module comprising:
a shell having an outlet;
a first support plate fixed to an end of the shell;
a second support plate fixed to the other end of the shell;
plurality of outside pipes supported by the first and second support plates and extending in the lengthwise direction of the shell;
tubular separation membrane elements disposed in the outside pipes;
a first cover attached to the first support plate; and
a second cover attached to the second support plate,
wherein the outside pipes have first openings formed on the first cover side through which a fluid flows as well as second openings formed on the second cover side through which the remaining flows out after the completion of separation processing, the tubular separation membrane elements have sealed ends on the first cover side as well as open ends on the second cover side, and the spaces between the outside pipes and the tubular separation membrane elements are opened on the first cover side and sealed on the second cover side, thereby a component, which is separated by the tubular separation membrane elements from the fluid flowing from the first openings of the outside pipes into the spaces between the outside pipes and the tubular separation membrane elements, flows out into the second cover from the open ends of the tubular separation membrane elements, and the remaining fluid flows out from the outlet of the shell through the second openings.

3. A multiple tube type separation membrane module according to claim 2 further comprising:
a partition attached to the first cover to form a first chamber and a second chamber on both sides of the partition,
wherein a fluid flowed into the first chamber passes through the spaces between the outside pipes having first openings in the first chamber and the tubular separation membrane elements, flows out from the second openings of the outside pipes, flows into the outside pipes having first openings in the second chamber from the second openings, passes through the spaces between the outside pipes and the tubular separation membrane elements, and flows into the second chamber.

4. A multiple tube type separation membrane module according to any one of claims 1 to 3, wherein the inside diameter of the outside pipe is 1.1 to 2 times the outside diameter of the tubular separation membrane elements.

5. A multiple tube type separation membrane module according to any one of claims 1 to 4, wherein the sealed ends of the tubular separation membrane elements are fixed in the outside pipes while keeping the spaces by pins disposed to either the outside pipes or the sealed ends.

6. A multiple tube type separation membrane module according to any one of claims 1 to 5, wherein the tubular separation membrane elements comprise hollow ceramic tubes around which separation membranes having fine pores approximately as large as the molecules of substances to be separated are formed.

7. A multiple tube type separation membrane module according to claim 6, wherein the separation membrane is composed of zeolite.
